# EUROPEAN PATENT APPLICATION

(11) **EP 1 653 398 A1**
(43) Date of publication of application: **03.05.2006**
(21) Application number: 04105425.5
(22) Date of filing: 29.10.2004
(51) Int. Cl.: G06Q 10/00

(54) **Extended User Interface for Email Composition**

(71) Applicant: Research In Motion Limited, Waterloo, Ontario N2L 3W8 (CA)
(72) Inventor: Scott, Sherryl Lee Lorraine, Toronto, Ontario M5T 1Y9 (CA)
(74) Representative: Rickard, David John

(57) **Abstract**

Method and apparatus for composing an email to be sent by a mobile device is disclosed. A screen including one or more fields for receiving user input to define a content of the email is adapted to expand at least a one of the fields to present additional options to define the content.

## Description

The present invention relates generally to wireless communication devices, and more particularly to a graphical user interface for controlling such devices.

### Description of the Related Art

Wireless communications devices providing data communication capabilities are frequently used for communicating messages such as electronic mail (email). Such devices are typically adapted to compose and send email as well as receive it. Providing a user interface for composing email on such a mobile device presents a number of challenges to the designer. Wireless communications devices (sometimes referred to herein as mobile devices) are usually handheld and small relative to less portable computing devices such as laptops and desktop computers. Inherently then, a visual display such as an LCD or other screen component of the mobile device has a small display area. As well, input devices such as buttons, keys, wheels or other pointing devices and the like are relatively small compared to similar devices for less portable computing devices.

Typically, a graphical user interface (GUI) for a mobile device comprises a main or home screen and one or more additional sub-screens or pop-up screens that may be navigated from the main screen. One such additional screen is an email composition screen. When composing an email, currently it is somewhat awkward and time consuming to add a recipient address in a copy field such as copy (Cc) and blind copy (Bcc). It is similarly difficult to add or otherwise define other email header field information such as attachments, message importance (e.g. high or low) on a handheld mobile device. Usually these types of functions can take up to three user steps to complete. Users often choose among different mobile devices in response to user interface features providing convenient ease of use. Having a user interface which simplifies adding parties to an email or defining optional email header fields is therefore desirable.

Accordingly, there is a resulting need for a method and apparatus that addresses one or more of these shortcomings.

### SUMMARY

The invention relates to a method and apparatus for composing an electronic mail (email). In accordance with a first aspect of the invention, there is provided a method for composing an email comprising: providing an email composition interface having one or more fields to define a content of the email, at least a one of the fields coupled to an extended interface component operable in response to user input to present a plurality of options for further defining the content of the email; and invoking the extended interface component in response to user input. In an embodiment, the method includes coupling the extended interface component to a one of the fields comprising a field defining email header information. Invoking the extended interface component may comprise monitoring a position of a user focus on an email composition screen of the email composition interface; and automatically invoking the extended interface component in response to the position. Preferably, the extended interface component comprises options for defining further content selected from the group of content comprising a copy email address, a blind copy email address, an email importance option and an attachment. In an embodiment, the method includes displaying one or more options selectable for defining respective content of the email and facilitating selection of said one or more options. User input is receivable via the expanded user interface to further define the content of the email.

In another aspect there is provided an apparatus comprising a storage medium having stored therein a plurality of programming instruction designed to enable the apparatus to: provide an email composition interface having one or more fields to define a content of the email, at least one of the fields coupled to an extended interface component operable in response to user input to present a plurality of options for further defining the content of the email; and invoke the extended interface component in response to user input to define the content; and a processor coupled to the storage medium to execute the programming instructions.

These and other aspects will be apparent to a person of ordinary skill in the art, including a computer program product aspect such as a machine readable medium comprising program code executable by a processor for implementing the method aspects.

### BRIEF DESCRIPTION OF THE DRAWINGS

Embodiments of present invention will now be described by way of example with reference to attached figures, wherein:

FIG. 1 is a block diagram which illustrates pertinent components of a wireless communication device which communicates within a wireless communication network;

FIG. 2 is a more detailed diagram of a preferred wireless communication device of FIG. 1;

FIGs. 3 through 7 are illustrations of an email composition screen, in accordance with an embodiment of the invention, for a wireless communication device such as the devices of FIGS. 1 and 2; and

FIG. 8 is flowchart which describes a method in accordance with the invention.

### DETAILED DESCRIPTION

Method and apparatus for composing email in a mobile device having wireless communication capabilities are described.

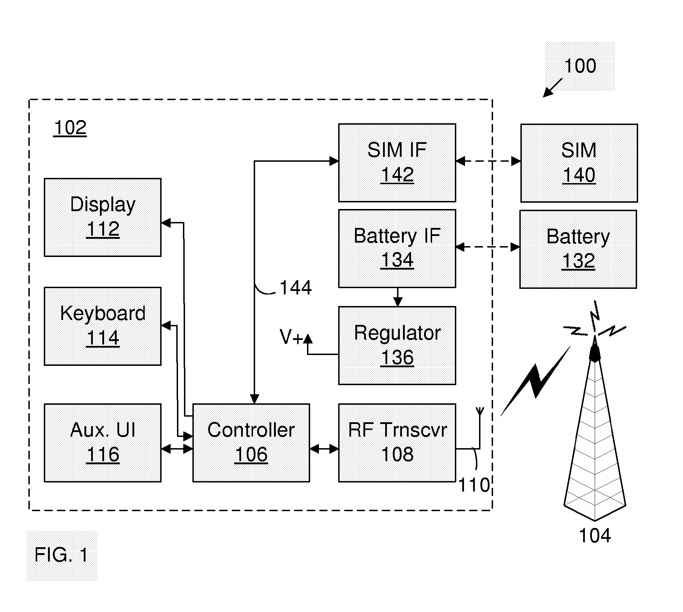

FIG. 1 is a block diagram of a communication system 100 which includes a mobile station (mobile device) 102 which communicates through a wireless communication network 104 symbolized by a base station. Mobile station 102 preferably includes a visual display 112, a keyboard 114, and perhaps one or more auxiliary user interfaces (UI) 116, each of which are coupled to a controller 106. Controller 106 is also coupled to radio frequency (RF) transceiver circuitry 108 and an antenna 110.

Typically, controller 106 is embodied as a central processing unit (CPU) which runs operating system software in a memory component (not shown). Controller 106 will normally control overall operation of mobile station 102, whereas signal processing operations associated with communication functions are typically performed in RF transceiver circuitry 108. Controller 106 interfaces with device display 112 to display received information, stored information, user inputs, and the like. Keyboard 114, which may be a telephone type keypad or full alphanumeric keyboard (e.g. QWERTY), is normally provided for entering data for storage in mobile station 102, information for transmission to network 104, a telephone number to place a telephone call, commands to be executed on mobile station 102, and possibly other or different user inputs.

Mobile station 102 sends communication signals to and receives communication signals from the wireless network 104 over a wireless link via antenna 110. RF transceiver circuitry 108 performs functions similar to those of a base station and a base station controller (BSC) (not shown), including for example modulation/demodulation and possibly encoding/decoding and encryption/decryption. It is also contemplated that RF transceiver circuitry 108 may perform certain functions in addition to those performed by a BSC. It will be apparent to those skilled in art that RF transceiver circuitry 108 will be adapted to particular wireless network or networks in which mobile station 102 is intended to operate.

Mobile station 102 includes a battery interface (IF) 134 for receiving one or more rechargeable batteries 132. Battery 132 provides electrical power to electrical circuitry in mobile station 102, and battery IF 132 provides for a mechanical and electrical connection for battery 132. Battery IF 132 is coupled to a regulator 136 which regulates power to the device. When mobile station 102 is fully operational, an RF transmitter of RF transceiver circuitry 108 is turned on only when it is sending to network, and is otherwise turned off or placed in a low-power mode to conserve power. Similarly, an RF receiver of RF transceiver circuitry 108 is typically periodically turned off to conserve power until it is needed to receive signals or information (if at all) during designated time periods.

Mobile station 102 operates using a Subscriber Identity Module (SIM) 140 which is connected to or inserted in mobile station 102 at a SIM interface (IF) 142. SIM 140 is one type of a conventional "smart card" used to identify an end user (or subscriber) of mobile station 102 and to personalize the device, among other things. Without SIM 140, the mobile station terminal is not fully operational for communication through the wireless network. By inserting SIM 140 into mobile station 102, an end user can have access to any and all of his/her subscribed services. SIM 140 generally includes a processor and memory for storing information. Since SIM 140 is coupled to SIM IF 142, it is coupled to controller 106 through communication lines 144. In order to identify the subscriber, SIM 140 contains some user parameters such as an International Mobile Subscriber Identity (IMSI). An advantage of using SIM 140 is that end users are not necessarily bound by any single physical mobile station. SIM 140 may store additional user information for the mobile station as well, including date book (or calendar) information and recent call information.

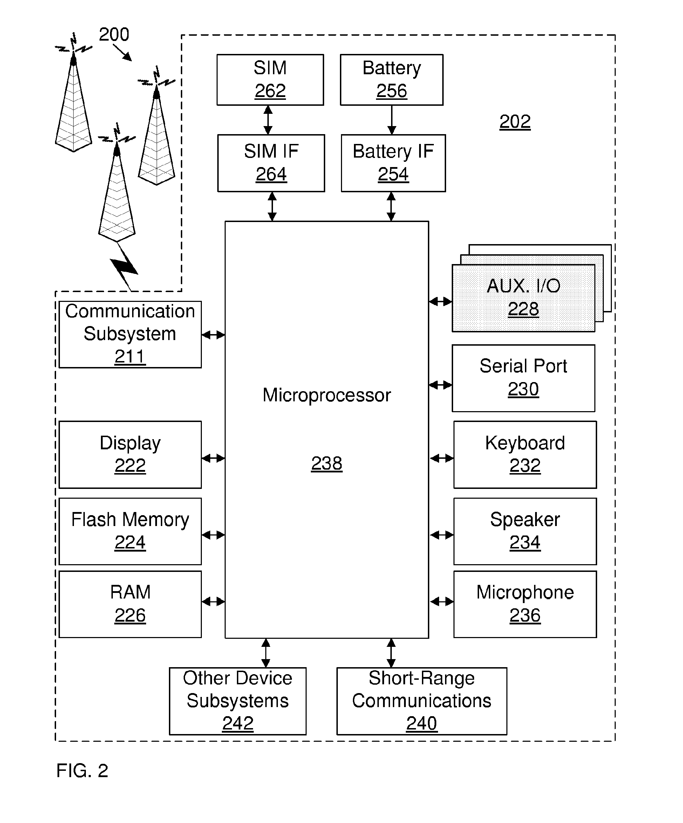

Mobile station 102 may consist of a single unit, such as a data communication device, a multiple-function communication device with data and voice communication capabilities, a personal digital assistant (PDA) enabled for wireless communication, or a computer incorporating an internal modem. Alternatively, mobile station 102 may be a multiple-module unit comprising a plurality of separate components, including but in no way limited to a computer or other device connected to a wireless modem. In particular, for example, in the mobile station block diagram of FIG. 1, RF transceiver circuitry 108 and antenna 110 may be implemented as a radio modem unit that may be inserted into a port on a laptop computer. In this case, the laptop computer would include display 112, keyboard 114, one or more auxiliary UIs 116, and controller 106 embodied as the computer's CPU. It is also contemplated that a computer or other equipment not normally capable of wireless communication may be adapted to connect to and effectively assume control of RF transceiver circuitry 108 and antenna 110 of a single-unit device such as one of those described above. Such a mobile station 102 may have a more particular implementation as described later in relation to mobile station 202 of FIG. 2.

FIG. 2 is a detailed block diagram of a preferred mobile station 202. Mobile station 202 is preferably a two-way communication device having at least voice and advanced data communication capabilities, including the capability to communicate with other computer systems. Depending on the functionality provided by mobile station 202, it may be referred to as a data messaging device, a two-way pager, a cellular telephone with data messaging capabilities, a wireless Internet appliance, or a data communication device (with or without telephony capabilities). Mobile station 202 may communicate with any one of a plurality of fixed transceiver base stations 200 within its geographic coverage area.

Mobile station 202 will normally incorporate a communication subsystem 211, which includes a receiver, a transmitter, and associated components, such as one or more (preferably embedded or internal) antenna elements and, local oscillators (LOs), and a processing module such as a digital signal processor (DSP) (all not shown). Communication subsystem 211 is analogous to RF transceiver circuitry 108 and antenna 110 shown in FIG. 1. As will be apparent to those skilled in field of communications, particular design of communication subsystem 211 depends on the communication network in which mobile station 202 is intended to operate.

Network access is associated with a subscriber or user of mobile station 202 and therefore mobile station 202 requires a Subscriber Identity Module or "SIM" card 262 to be inserted in a SIM IF 264 in order to operate in the network. SIM 262 includes those features described in relation to FIG. 1. Mobile station 202 is a battery-powered device so it also includes a battery IF 254 for receiving one or more rechargeable batteries 256. Such a battery 256 provides electrical power to most if not all electrical circuitry in mobile station 202, and battery IF 254 provides for a mechanical and electrical connection for it. The battery IF 254 is coupled to a regulator (not shown) which provides power V+ to all of the circuitry.

Mobile station 202 includes a microprocessor 238 (which is one implementation of controller 106 of FIG. 1) which controls overall operation of mobile station 202. Communication functions, including at least data and voice communications, are performed through communication subsystem 211. Microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240, and any other device subsystems generally designated at 242. Some of the subsystems shown in FIG. 2 perform communication-related functions, whereas other subsystems may provide "resident" or on-device functions. Notably, some subsystems, such as keyboard 232 and display 222, for example, may be used for both communication-related functions, such as entering a text message for transmission over a communication network, and device-resident functions such as a calculator or task list. Operating system software used by microprocessor 238 is preferably stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, preferably enables execution of software applications on mobile station 202. A predetermined set of applications which control basic device operations, including at least data and voice communication applications, will normally be installed on mobile station 202 during its manufacture. A preferred application that may be loaded onto mobile station 202 may be a personal information manager (PIM) application having the ability to organize and manage data items relating to the user such as, but not limited to, instant messaging (IM), email, calendar events, voice mails, appointments, and task items. Naturally, one or more memory stores are available on mobile station 202 and SIM 262 to facilitate storage of PIM data items and other information.

The PIM application preferably has the ability to send and receive data items via the wireless network. In a preferred embodiment, PIM data items are seamlessly integrated, synchronized, and updated via the wireless network, with the mobile station user's corresponding data items stored and/or associated with a host computer system thereby creating a mirrored host computer on mobile station 202 with respect to such items. This is especially advantageous where the host computer system is the mobile station user's office computer system. Additional applications may also be loaded onto mobile station 202 through network 200, an auxiliary I/O subsystem 228, serial port 230, short-range communications subsystem 240, or any other suitable subsystem 242, and installed by a user in RAM 226 or preferably a non-volatile store (not shown) for execution by microprocessor 238. Such flexibility in application installation increases the functionality of mobile station 202 and may provide enhanced on-device functions, communication-related functions, or both. For example, secure communication applications may enable electronic commerce functions and other such financial transactions to be performed using mobile station 202.

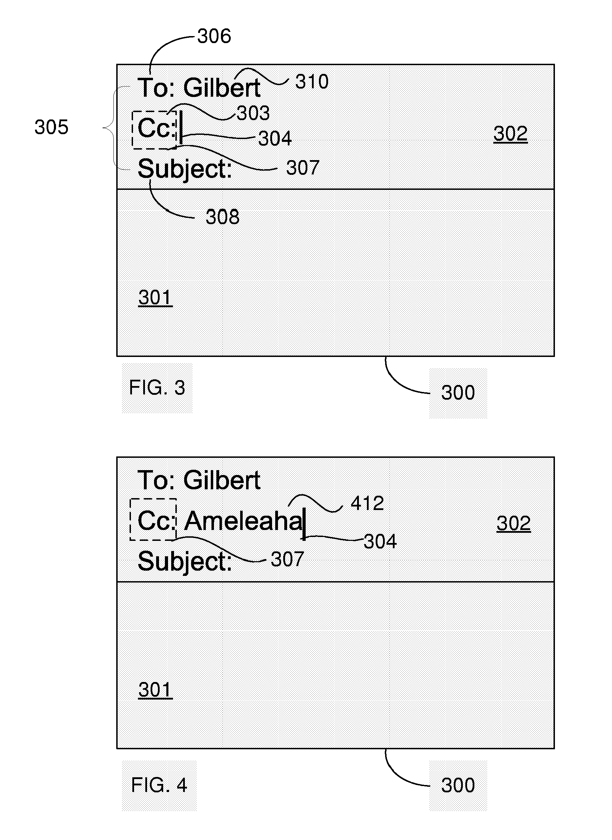

In a data communication mode, a received signal such as a text message, an email message, or web page download will be processed by communication subsystem 211 and input to microprocessor 238. Microprocessor 238 will preferably further process the signal for output to display 222, to auxiliary I/O device 228 or both. A user of mobile station 202 may also compose data items, such as email messages, for example, using keyboard 232 in conjunction with display 222 and possibly auxiliary I/O device 228 as described further herein with reference to Figs. 3-9. Keyboard 232 is preferably a complete alphanumeric keyboard (e.g. full or condensed QWERTY) and/or telephone-type keypad. These composed items may be transmitted over a communication network through communication subsystem 211.

For voice communications, the overall operation of mobile station 202 is substantially similar, except that the received signals would be output to speaker 234 and signals for transmission would be generated by microphone 236. Alternative voice or audio I/O subsystems, such as a voice message recording subsystem, may also be implemented on mobile station 202. Although voice or audio signal output is preferably accomplished primarily through speaker 234, display 222 may also be used to provide an indication of the identity of a calling party, duration of a voice call, or other voice call related information, as some examples.

Serial port 230 in FIG. 2 is normally implemented in a personal digital assistant (PDA)-type communication device for which synchronization with a user's desktop computer is a desirable, albeit optional, component. Serial port 230 enables a user to set preferences through an external device or software application and extends the capabilities of mobile station 202 by providing for information or software downloads to mobile station 202 other than through a wireless communication network. The alternate download path may, for example, be used to load an encryption key onto mobile station 202 through a direct and thus reliable and trusted connection to thereby provide secure device communication.

Short-range communications subsystem 240 of FIG. 2 is an additional optional component which provides for communication between mobile station 202 and different systems or devices, which need not necessarily be similar devices. For example, subsystem 240 may include an infrared device and associated circuits and components, or a Bluetooth^{™} communication module to provide for communication with similarly-enabled systems and devices. Bluetooth^{™} is a registered trademark of Bluetooth SIG, Inc.

In accordance with an embodiment of the invention, mobile station 202 is configured for sending and receiving data items and includes a PIM for organizing and managing data items relating to the user such as, but not limited to, instant messaging (IM), email, calendar events, calendar appointments, and task items, etc. To provide a user-friendly environment to control the operation of mobile station 202, PIM together with the operation system and various software applications resident on the station 202 provides a GUI having a main screen and a plurality of sub-screens navigable from the main screen.

Referring now to FIG. 3, there is an illustration of an email composition screen 300, in accordance with an embodiment of the invention, for display 222 of mobile station 202 providing a graphical user interface for controlling mobile station 202. Screen 300 is divided into two main portions, namely an email body portion 301 for entering and displaying the body text of an email to be sent and an email header portion 302 for entering and displaying email header data in various fields 305 some of which are optional. Fields 305 include To: field 306 and Subject: field 308 as well as optional fields such as Cc: 303 or Bcc: (not shown) for additional recipients. Other optional fields or characteristics may include, Reply To:, Flag or follow-up indicator, message importance and attachments which may be defined using fields. A field typically includes a description portion (e.g. "To") and a user editable portion. To: field 306 includes a recipient 310 in a user editable portion of the field. While a single primary recipient is shown, additional recipients may be added, typically delimited by semi-colons as is well known in the art. In the user editable portion of the Cc: field 303, there is shown a cursor for marking the current active user focus area on the screen 300. The cursor 304 may be manipulated by a user via input devices such as keyboard 232 or auxiliary I/O devices 228 which may comprise a wheel device for moving the cursor. The cursor may move between fields 305 as well as between regions 301 and 302. FIG. 4 illustrates a recipient 412 in Cc: field 303.

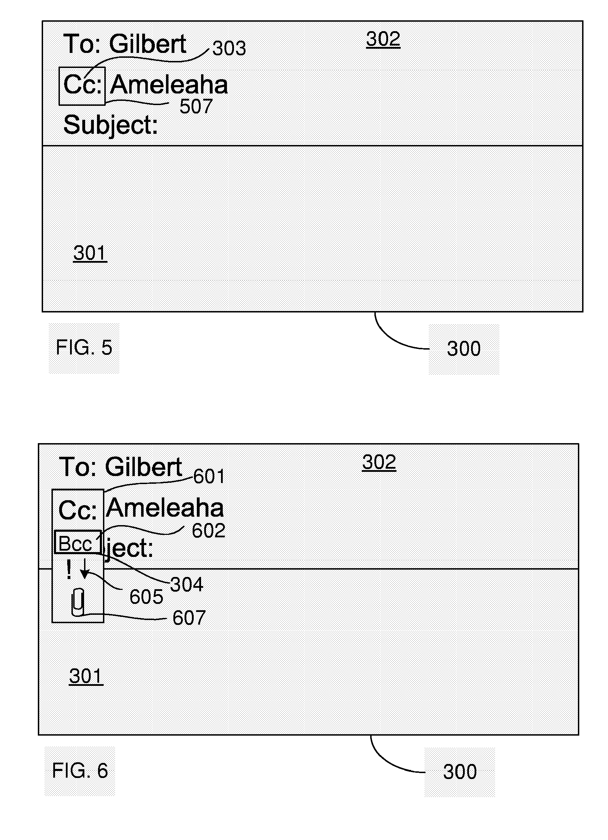

In accordance with the present embodiment, Cc: field 303 is highlighted. Field 303 is highlighted by a box 307 in dashed outline but may be highlighted in other ways such as shadowing, holding etc. Cc: field 303 may be selected by a user to invoke an extended interface option for defining including choosing additional email data. With reference to FIG. 5, cursor 304 has been manipulated to position the user focus on field 303 as indicated by a box 507 in solid outline. The position of the user focus on the email composition screen is monitored and screen changes made in response to the position. To invoke the extended interface for specifying the optional email data, the user interface may be adapted to respond to a user input via one of the input devices (e.g. a key of keyboard 232) when the focus is appropriately in place. Alternatively or additionally, the extended interface may be automatically invoked after a period of delay (e.g. one second) during which the cursor remains focused on field 303.

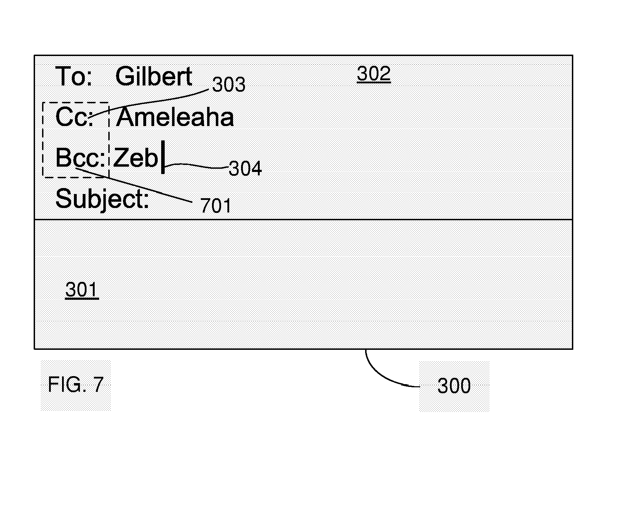

FIG. 6 shows a drop down list 601, one example of an extended interface, for defining the optional data by choosing one of the fields to be used. Cursor 304 may be manipulated to select an option to be defined (including deleted or changed as the case may be). Presently, cursor 304 is focused on Bcc: option 602. While options may be represented by text descriptors, they may be represented by symbols well known in the art. For example, pop-up window 601 shows message importance options 605 with an exclamation mark and downward pointing arrow and an attachment option 607 with a paperclip. As mentioned, other options may be presented such as Reply To:, follow-up, etc. Selecting an option, such as by a key input or focus pause on the option for a predetermined delay period, activates a respective interface for completing the definition of an option. With reference to FIG. 7, there is shown a new field 701 added to header portion 302 for a Bcc: option. Field 303 and 701 are both highlighted, using a dashed outline box, indicating that should cursor 304 be manipulated to focus on either field, list 601 could be invoked to define an option. Other interfaces 601 may include a pop-up window or complete screen redraw etc.

Though not shown, an interface for completing the definition of an option may include further dialogs. For example, when defining an attachment, a dialog may permit choices among attachment types such as images, video, audio, text, etc. or source such as a camera or input device or storage device available.

Persons skilled in the art will recognize that options may be deleted as well as added to an email being composed. Though not shown, via list 601, field 303 may be deleted such that no Cc: recipients may be specified, as desired. Though screen 300 illustrates Cc: field 303 as the field that expands via list 601 to present the various options, another field (e.g. To: field 306) may be used. Thus initial screen 300 of FIG. 3 may omit a Cc: field 303. To: Field 306 may also be optional and be removed (or added) via the extended interface. Optionally, The email composition interface may be configured via user definable options to select which fields will appear by default upon initiation of the composition interface. Remaining fields may appear in the extended interface. Further optionally Should a user routinely add (or remove) a field via the extended interface, the extended interface may monitor such behavior and add (or remove) the field to (or from) the default fields. Before making such a change automatically, such change may be confirmed with the user.

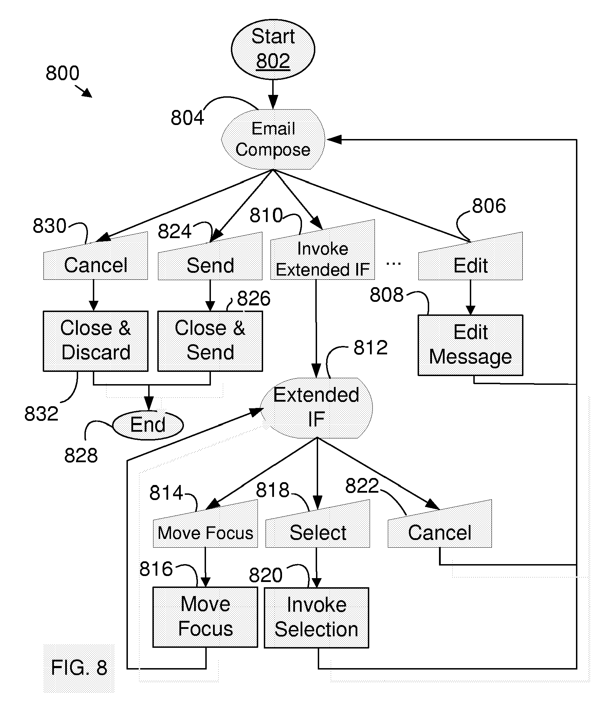

FIG. 8 is a flowchart which shows a method in accordance with an embodiment of the invention providing a graphical user interface to compose an email using an extended interface for defining email data. Operations 800 commence at start block 802. Though not shown the operations may be initiated from a main screen of mobile device 202 or an address book function, for example, upon the selection of one or more initial recipients.

At step 804, the GUI for email composition is initiated and screen 300 is shown on display 222. Should the GUI be initiated with one or more recipients, for example from an address book function, the recipients may be used to populate the user editable portion 310 of To: field 306. A user may compose the email, using the input devices as previously discussed to input data and commands and manipulate the cursor about the screen 300. Step 806 represents user edit input (e.g. typing in data or moving the cursor). Step 808 executes the input, for example, rendering a change to display 222 and adding text to a data element associated with a field or message body. Alternatively, the cursor may be moved on the display and no data entered. Operations return to step 804 for further input. Steps 824 and 830 represent particular command inputs discussed further below. Step 810 represents the invocation of extend email option editing via list 601.

At steps 810-812, extended interface (IF) (i.e. list 601) is invoked by a user, such as by moving the cursor to field 303 and waiting a predetermined delay period. A list of selectable options for defining content is displayed. At step 812, within list 601, a user may manipulate the cursor to move the focus about the list (steps 814-816). A particular option may be selected (step 818) to invoke a respective interface (step 818) as discussed previously for defining the associated email data. At step 822, a user may enter a command (e.g. an escape input) to cancel the list 601 rather than define the data as is well known in the art. Once the option is defined (step 820) or a user cancels (step 822), operations may continue back at step 804 with display screen 300.

When composing an email, a user may decide to send the email, cancel its composition or save the email for later disposition (not shown). Step 824 represents the input of a send command and step 826 the operations to close screen 300 and send the email. Thereafter operations 800 end (step 828). Persons skilled in the art will recognize that certain error checking or verifying may be performed (not shown) such as to confirm at least one recipient has been input. Step 830 represents the input of a cancel command and step 832 the operations to close screen 300 and discard the email. A confirmation dialog may ensue, if desired. A similar operation sequence may be included for a save command (if supported). Thereafter operations 800 end (step 828).

In accordance with the embodiment, an extended interface component is provided to conveniently define email header information, providing the flexibility of choice.

The above-described embodiments of the present application are intended to be examples only. Those of skill in the art may effect alterations, modifications and variations to the particular embodiments without departing from the scope of the application. The invention described herein in the recited claims intend to cover and embrace all suitable changes in technology.

## Claims

1. A method for composing an email comprising:
providing an email composition interface having one or more fields to define a content of the email, at least a one of the fields coupled to an extended interface component operable in response to user input to present a plurality of options for further defining the content of the email; and
invoking the extended interface component in response to user input.

2. The method of claim 1 comprising coupling the extended interface component to a one of the fields comprising a field defining email header information.

3. The method according to claim 1 or claim 2 wherein invoking the extended interface component comprises: monitoring a position of a user focus on an email composition screen of the email composition interface; and automatically invoking the extended interface component in response to the position.

4. The method according to any one of claims 1 to 3 wherein the extended interface component comprises options for defining further content selected from the group of content comprising a copy email address, a blind copy email address, an email importance option and an attachment.

5. The method according to any one of claims 1 to 4 wherein invoking the extended interface component comprises displaying one or more options selectable for defining respective content of the email and facilitating selection of said one or more options.

6. The method according to any one of claims 1 to 5 comprising receiving user input via said expanded interface component to further define the content of the email.

7. An apparatus comprising:
a storage medium having stored therein a plurality of programming instruction designed to enable the apparatus to:
provide an email composition interface having one or more fields to define a content of the email, at least a one of the fields coupled to an extended interface component operable in response to user input to present a plurality of options for further defining the content of the email; and
invoke the extended interface component in response to user input to define the content; and
a processor coupled to the storage medium to execute the programming instructions.

8. The apparatus of claim 7 wherein said programming instructions are designed to couple the extended interface component to a one of the fields comprising a field defining email header information.

9. The apparatus according to any one of claims 7 to 8 wherein said programming instructions are designed to monitor a position of a user focus on an email composition screen of the email composition interface; and automatically invoke the extended interface component in response to the position.

10. The apparatus according to any one of claims 7 to 9 wherein said programming instructions are designed to provide options for defining further content selected from the group of content comprising a copy email address, a blind copy email address, an email importance option and an attachment.

11. The apparatus according to any one of claims 7 to 10 wherein said programming instructions are designed to display one or more options selectable for defining respective content of the email and facilitate selection of said one or more options.

12. The apparatus according to any one of claims 7 to 11 wherein said programming instructions are designed to receive user input via said expanded interface component to further define the content of the email.

13. A machine readable medium comprising program code executable on a processor for implementing any of the methods of claims 1 to 6.

## Amended claims

### Amended claims in accordance with Rule 86(2) EPC.

**1.** A method for composing an email comprising:
providing an email composition interface having one or more fields (303, 305, 306, 308) to define a content of the email, at least one of said fields having a field descriptor coupled to an extended interface component (601) operable in response to a user input to present a plurality of options for adding a field (701) to or removing a field from the email composition interface to further define the content of the email; and
invoking the extended interface component in response to said user input.

**2.** The method of claim 1 comprising coupling the extended interface component (601) to said one of said fields comprising a field (303) defining email header information.

**3.** The method according to claim 1 or claim 2 wherein invoking the extended interface component (601) in response to said user input comprises: monitoring a position of a user focus on an email composition screen (300) of the email composition interface; and automatically invoking the extended interface component in response to the position.

**4.** The method according to any one of claims 1 to 3 wherein the extended interface component (601) comprises options for defining further content selected from the group of content comprising a copy email address (303), a blind copy email address (602), an email importance option (605) and an attachment (607).

**5.** The method according to any one of claims 1 to 4 wherein invoking the extended interface component (601) comprises displaying one or more options selectable for defining respective content of the email and facilitating selection of said one or more options.

**6.** The method according to any one of claims 1 to 5 comprising receiving user input via said expanded interface component (601) to further define the content of the email.

**7.** The method according to any one of the preceding claims comprising providing an interface to select at least some of said one or more fields (303, 305, 306, 308) to appear by default in said email composition interface.

**8.** The method of claim 7 comprising monitoring use of the extended interface component (601) and adding a field to or removing a field from said fields to appear by default in response to said monitoring.

**9.** An apparatus (102, 202) comprising:
a storage medium (224) having stored therein a plurality of programming instruction designed to enable the apparatus to:
provide an email composition interface having one or more fields (303, 305, 306, 308) to define a content of the email, at least one of said fields having a field descriptor coupled to an extended interface component (601) operable in response to user input to present a plurality of options for adding a field (701) to or removing a field from the email composition interface to further define the content of the email; and
invoke the extended interface component in response to said user input to define the content; and
a processor (106, 238) coupled to the storage medium to execute the programming instructions.

**10.** The apparatus of claim 9 wherein said programming instructions are designed to couple the extended interface component (601) to said one of said fields comprising a field (303) defining email header information.

**11.** The apparatus according to any one of claims 9 to 10 wherein said programming instructions are designed to monitor a position of a user focus on an email composition screen (300) of the email composition interface; and automatically invoke the extended interface component (601) in response to the position.

**12.** The apparatus according to any one of claims 9 to 11 wherein said programming instructions are designed to provide options for defining further content selected from the group of content comprising a copy email address (303), a blind copy email address (602), an email importance option (605) and an attachment (607).

**13.** The apparatus according to any one of claims 9 to 12 wherein said programming instructions are designed to display one or more options selectable for defining respective content of the email and facilitate selection of said one or more options.

**14.** The apparatus according to any one of claims 9 to 13 wherein said programming instructions are designed to receive user input via said expanded interface component (601) to further define the content of the email.

**15.** The apparatus according to any one of claims 9 to 14 wherein said programming instructions are designed to provide an interface to select at least some of said one or more fields (303, 305, 306, 308) to appear by default in said email composition interface.

**16.** The apparatus according to any one of claims 9 to 15 wherein said programming instructions are designed to monitor use of the extended interface component (601) and adding a field to or removing a field from said fields to appear by default in response to said monitoring.

**17.** A machine readable medium (224) comprising program code executable on a processor (106, 238) of a computing device (102, 202) for implementing the method of any one of claims 1 to 8.

**18.** A communications system (100) comprising at least one apparatus according to any one of claims 10 to 16.
